Europäisches Patentamt

European Patent Office

Office européen des brevets

(11) Veröffentlichungsnummer: **0 240 893**
**A2**

(12) **EUROPÄISCHE PATENTANMELDUNG**

(21) Anmeldenummer: **87104686.8**

(22) Anmeldetag: **30.03.87**

(51) Int. Cl.⁴: **G01B 11/00**

(30) Priorität: **09.04.86 DE 3611896**

(43) Veröffentlichungstag der Anmeldung:
**14.10.87 Patentblatt 87/42**

(84) Benannte Vertragsstaaten:
**AT BE CH ES FR GB IT LI NL SE**

(71) Anmelder: **Bochumer Eisenhütte Heintzmann GmbH & Co. KG**
**Bessemerstrasse 80**
**D-4630 Bochum(DE)**

(72) Erfinder: **Sebastian, Lothar, Dipl.-Ing.**
**Universitaetsstrasse 123**
**D-4630 Bochum(DE)**
Erfinder: **Guse, Kuno**
**Breierspfad 4**
**D-4600 Dortmund(DE)**

(74) Vertreter: **Bockermann, Rolf et al**
**Patent- und Rechtsanwälte Dr.-Ing.**
**Stuhlmann Dipl.-Ing. Willert Dr.-Ing.**
**Oidtmann Dipl.-Ing. Bockermann Dipl.-Ing.**
**Schneiders Bergstrasse 159 Postfach 10 24 50**
**D-4630 Bochum 1(DE)**

(54) Vorrichtung zum berührungslosen Messen geometrischer Grössen.

(57) Die Vorrichtung umfaßt Sender 3 und einen Empfänger 7, die unter Eingliederung von 90°-Deflektoren 5, 6 jeweils senkrecht zu der Meßebene angeordnet sind, in welcher sich das Meßobjekt 4 befindet. Hierdurch ist keine Kalibrierung, sondern nur noch eine Justierung erforderlich. Zur Abstandsmessung genügt es, wenn sich der empfängerseitige Deflektor 6 dreht. Wenn beide Deflektoren 5, 6 rotieren, soll der empfängerseitige Deflektor 6 mit einer wesentlich höheren Drehzahl rotieren. Der senderseitige Deflektor 5 ist vertikal verstellbar und arretierbar. Ferner ist es denkbar, daß der gesamte Meßkopf 1 um eine Achse drehbar und in dieser Achse verlagerbar ist, die dann parallel zu der Drehachse 21 des Deflektors 6 verläuft.

Fig. 1

## Vorrichtung zum berührungslosen Messen geometrischer Größen

Die Erfindung richtet sich auf eine Vorrichtung zum berührungslosen Messen geometrischer Größen gemäß den Merkmalen im Oberbegriff des Anspruchs 1.

Eine derartige Vorrichtung zählt durch die DE-OS 28 10 192 zum Stand der Technik. Ihr Aufbau ist so getroffen, daß ein gebündelter Lichtstrahl von einem Sender zunächst auf einen senkrecht zur Achse des Lichtstrahls rotierenden Deflektor geworfen wird. Der Deflektor projiziert den Lichtstrahl in derselben Ebene auf ein Meßobjekt. Von diesem wird der Lichtstrahl abgelenkt und einem weiteren rotierenden Deflektor zugeleitet, von welchem er dann einem lichtempfindlichen Empfänger zugeführt wird. Der dem Empfänger zugeordnete Deflektor rotiert parallel zu dem senderseitigen Deflektor, jedoch mit einer höheren Drehgeschwindigkeit. Der Lichtstrahl verläuft immer nur in einer einzigen Ebene.

Da der Abstand der Drehachsen der Deflektoren bekannt ist, kann über die jeweilige Winkelstellung der Deflektoren zum Meßobjekt auf der Basis der Triangulation der Ort des vom Lichtstrahl am Meßobjekt jeweils abgebildeten Punkts innerhalb der vorgegebenen Koordinatenebene über eine angeschlossene Auswerte-Elektronik festgestellt werden.

Ein Mangel der bekannten Vorrichtung ist der Verlauf des Lichtstrahls in einer einzigen Ebene. Dies hat zur Folge, daß der vom Sender abgehende Lichtstrahl aufgrund nicht zu vermeidender technischer Unzulänglichkeiten wie z. B. Fertigungstoleranzen, Lagerspiel usw. in aller Regel nicht in der Drehachse des senderseitigen Deflektors auftrifft. Dadurch stimmt die Richtung des vom Deflektor abgelenkten Strahls nicht mit der Idealrichtung überein. Der hierdurch bedingte Winkelfehler wäre vernachlässigbar, wenn der von dem Lichtstrahl bestrichene Sektor auf dem Meßobjekt relativ klein ist, d. h. wenn Ein-und Ausfallwinkel gering sind. Je stärker jedoch diese Winkel anwachsen, um so mehr erhöht sich auch die Meßungenauigkeit, insbesondere in den jeweiligen Endlagen des von dem Lichtstrahl bestrichenen Sektors. Mithin ist im bekannten Fall die Meßgenauigkeit nur dann einigermaßen zufriedenstellend, wenn es gelingt, ein zu messendes Objekt in den Zentralbereich des Lichtstrahlsektors zu bringen.

Selbstverständlich kann die bekannte Vorrichtung kalibriert werden, um durch z. B. Fertigungstoleranzen oder Lagerspiel bedingte Fehler weitgehend zu eliminieren. Der Mangel einer Kalibrierung besteht aber darin, daß sie nicht nur zeitlich und gerätetechnisch aufwendig, sondern vergleichsweise leicht durch äußere Einwirkungen wie Erschütterungen, Stöße usw. aufzuheben ist.

Der Erfindung liegt die Aufgabe zugrunde, die im Oberbegriff des Anspruchs 1 beschriebene Vorrichtung so zu verbessern, daß bei vergleichsweise einfachem Aufbau eine kontinuierliche berührungslose Messung auch über längere Zeiträume ohne Kalibrierung bzw. Nachkalibrierung gewährleistet werden kann.

Die Lösung dieser Aufgabe besteht in den im kennzeichnenden Teil des Anspruchs 1 aufgeführten Merkmalen.

Im Gegensatz zu der bekannten Vorrichtung verläuft der Lichtstrahl zwischen dem Sender und dem Empfänger jetzt nicht mehr ausschließlich in einer einzigen Ebene. Vielmehr ist dafür Sorge getragen, daß der vom Sender abgehende Lichtstrahl, z. B. ein Laser, parallel zu der Drehachse des rotierenden Deflektors verläuft und auch der in den Empfänger einfallende Anteil des gesendeten Lichtstrahls sich in dieser Drehachse erstreckt. Dies wird durch Deflektoren erzielt, welche den senderseitigen Lichtstrahl um 90° in die Meßebene und den vom Meßobjekt reflektierten Anteil des Lichtstrahls wieder aus der Meßebene um 90° in Richtung auf den Empfänger ablenken. Ein solcher Strahlenverlauf ist relativ einfach zu justieren und während des Meßbetriebs aufrechtzuerhalten, da sowohl die Parallelität des Sendestrahls zum Empfangsstrahl als auch die koaxiale Ausrichtung des Empfangsstrahls auf die Drehachse des empfängerseitigen Deflektors problemlos hergestellt werden kann. Im Prinzip ist lediglich eine Justierung in der Drehachse erforderlich. Eine Kalibrierung braucht indessen nicht mehr vorgenommen zu werden.

Ein weiterer Vorteil im Rahmen der Erfindung ist der Sachverhalt, daß ein gebündelter monochromatischer Strahl auf nur einen punktuell wirksamen Empfänger, insbesondere eine Fotodiode, trifft. Es ist folglich nur eine eng begrenzte Abbildungsfläche vorhanden. Dadurch ist es bei einer durch gleich welche Umstände auch immer erfolgten Dejustierung der Vorrichtung automatisch gewährleistet, daß der empfängerseitige Anteil des Lichtstrahls nicht mehr von der Fotodiode erfaßt wird und somit das Gerät selber den Funktionsausfall signalisiert.

Die Erfindung kommt im einfachsten Anwendungsfall mit einem feststehenden und einem rotierenden Deflektor aus, wobei der feststehende Deflektor bevorzugt dem Sender zugeordnet ist. Auf diese Weise ist unter Anwendung der Triangulation problemlos eine Entfernungsmessung durchzuführen. Ein Anwendungsbeispiel ist das Messen des Durchhangs von Blechen in Walzwerken.

Vorteilhafte weiterbildende Merkmale sind Bestandteil des Anspruchs 2. Auf diese Weise kann problemlos der Reflektionspunkt des Lichtstrahls justiert werden. Bevorzugt wird der nicht rotierende bzw. der jeweils langsamer rotierende Deflektor verstellt und dann arretiert.

Wie vorstehend bereits erläutert, genügt es zur einfachen Entfernungsmessung nur einen der 90°-Deflektoren rotieren zu lassen. Sollen jedoch beispielsweise Profile im Zuge eines Biegeprozesses auf einer Biegemaschine vermessen werden, so gelangen vorteilhaft die Merkmale des Anspruchs 3 zur Anwendung. Wichtig ist es hierbei, daß der empfängerseitige Deflektor schneller, möglichst erheblich schneller als der senderseitige Deflektor dreht, um den Empfänger so häufig wie nur möglich in der Zeiteinheit zu sensibilisieren. Die Meßgenauigkeit wird hierdurch erheblich heraufgesetzt.

Die Konturen von Tunnel oder untertägigen Strecken sind mit den Merkmalen des Anspruchs 4 gezielt erfaßbar. Hierbei ist es denkbar, daß ein Deflektor steht und der andere Deflektor rotiert. Eine andere Ausführungsform besteht darin, daß beide Deflektoren rotieren können. Die Drehachse der Halterung kann in bevorzugter Ausgestaltung koaxial zu dem senderseitigen Lichtstrahl verlaufen.

Durch eine translatorische Verlagerung der Halterung entsprechend den Merkmalen des Anspruchs 5 können erfindungsgemäß auch räumliche Gebilde vermessen werden. Hierbei kann es vorteilhaft sein, wenn beide Deflektoren rotieren.

Eine besonders vorteilhafte Ausführungsform der Deflektoren besteht in den Merkmalen des Anspruchs 6. Insbesondere Pentaprismen haben die Eigenschaft, daß sie eine einwandfreie 90°-Umlenkung eines Lichtstrahls gewährleisten.

Um möglichst problemlos die Ein-und Ausfallwinkel in der Meßebene bestimmen zu können, sind die Merkmale des Anspruchs 7 vorgesehen. Hierbei werden zunächst die Deflektoren so ausgerichtet, daß ein vom Sender ausgehender Lichtstrahl unmittelbar in den Empfänger fällt. Dieser Position des Deflektors, insbesondere des empfängerseitigen Deflektors, entspricht eine bestimmte Stellung der Impulsscheibe. Bei konstanter Drehzahl des Deflektors stehen also die Impulse an dem Empfänger zu den Impulsen der Impulsscheibe in einer bestimmten zeitlichen Abhängigkeit (abzugleichender Offset), welche mit in die Auswerte-Elektronik eingegeben wird. Die Meßgeschwindigkeit sowie die Meßgenauigkeit sind von der Auflösung des Absolut-oder Inkrementalgebers abhängig.

Um die Meßgenauigkeit noch weiter zu erhöhen, können die Merkmale des Anspruchs 8 benutzt werden. In diesem Fall wird also der Absolut-oder Inkrementalgeber durch einen Laufzeit-Drehgeber ersetzt. Dadurch können entsprechend den Erfordernissen der jeweils zu messenden Objekte Meßgeschwindigkeit und -genauigkeit variiert werden. Die Auflösung und Genauigkeit des Laufzeit-Drehgebers ist hierbei von der Drehzahlgleichförmigkeit sowie der Oszillatorfrequenz abhängig.

Die Erfindung ist nachfolgend anhand von in den Zeichnungen dargestellten Ausführungsbeispielen näher erläutert. Es zeigen:

Figur 1 in perspektivischer Darstellung eine Vorrichtung zum berührungslosen Messen geometrischer Größen;

Figur 2 eine Draufsicht auf die Vorrichtung der Figur 1 im Schema;

Figur 3 ebenfalls in schematischer Draufsicht eine weitere Ausführungsform einer Vorrichtung gemäß Figur 1;

Figur 4 in schematischer Darstellung eine Anwendungsvariation der Ausführungsform der Vorrichtung gemäß Figur 3;

Figur 5 in perspektivischer Darstellung eine dritte Ausführungsform der Vorrichtung gemäß Figur 1 und

Figur 6 im Schema das Justieren der Vorrichtung der Figur 1.

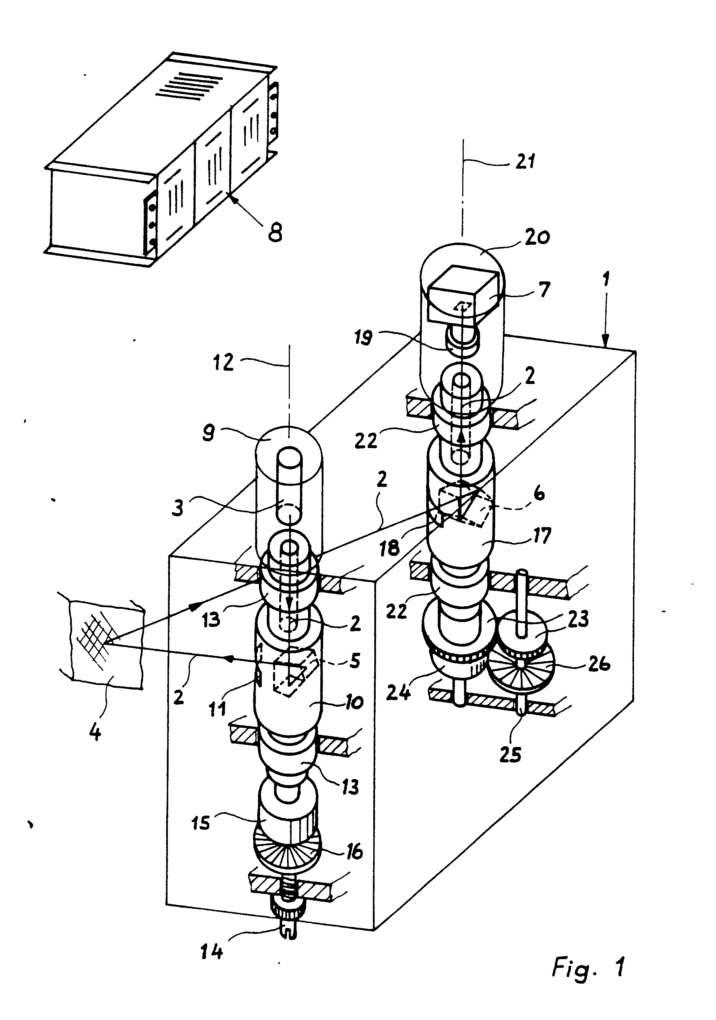

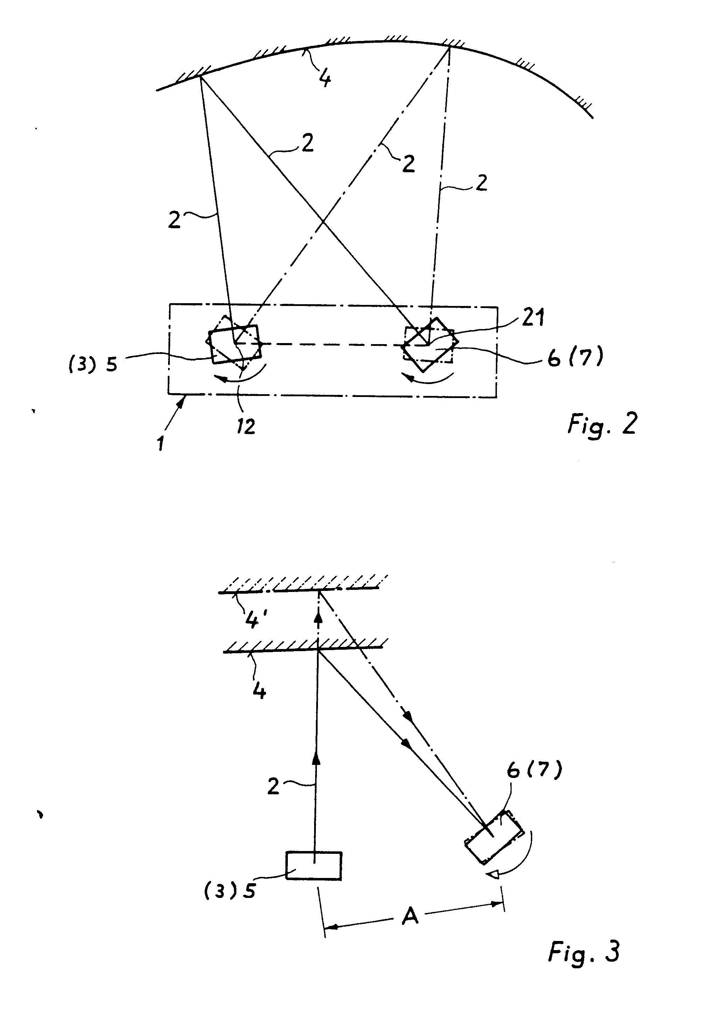

Die in den Figuren 1 und 2 dargestellte Vorrichtung zum berührungslosen Messen geometrischer Größen umfaßt einen gehäuseartigen Meßkopf 1 mit einen einen gebündelten monochromatischen Strahl 2, insbesondere Laserlicht, projizierenden Lichtquelle 3, mit einem den Lichtstrahl 2 im Winkel von 90° auf ein Meßobjekt 4 ablenkenden Deflektor 5, mit einem weiteren Deflektor 6, welcher den vom Meßobjekt 4 reflektierten Lichtstrahl 2 auf einen Empfänger 7 in Form einer Fotodiode wirft, und mit einer angekoppelten Auswerte-Elektronik 8.

Die in einem Gehäuse 9 gekapselte Lichtquelle 3 besteht beim Ausführungsbeispiel aus einem Laser. Der vertikal nach unten gerichtete Laserstrahl 2 trifft auf den als Pentaprisma ausgebildeten Deflektor 5 und wird von diesem um exakt 90° aus der Vertikalen in die horizontale Meßebene abgelenkt, in der sich auch das Meßobjekt 4 befindet. Der Deflektor 5 ist ebenfalls in einem Gehäuse 10 gekapselt. Das Gehäuse 10 besitzt eine Austrittsöffnung 11 für den Laserstrahl 2.

Der Deflektor 5 rotiert zusammen mit seinem Gehäuse 10 um eine vertikale Achse 12, welche über Lager 13 im Meßkopf 1 abgestützt ist.

Der Deflektor 5 ist mit Hilfe einer Justiereinheit 14 in der Drehachse 12 vertikal verstellbar.

Ferner sind auf der Drehachse 12 der Senderanordnung 3, 5 noch ein Schrittmotor 15 sowie ein Absolut-oder Inkrementalgeber 16 angeordnet.

Der von dem Meßobjekt 4 reflektierte Laserstrahl 2 gelangt zu dem als Pentaprisma ausgebildeten Deflektor 6, welcher in einem Gehäuse 17 mit Eintrittsöffnung 18 gekapselt ist. Vom Deflektor 6 aus tritt der Laserstrahl 2 über ein Objektiv 19 in die in einem Gehäuse 20 gekapselte punktuell wirksame Fotodiode 7 ein.

Der Deflektor 6 rotiert zusammen mit seinem Gehäuse 17 um eine Achse 21, die parallel zu der Drehachse 12 der Senderanordnung 3, 5 verläuft. Das Gehäuse 17 ist über Lager 22 im Meßkopf 1 abgestützt.

Der Deflektor 6 rotiert mit einer Drehgeschwindigkeit, die um ein Vielfaches höher als die Drehgeschwindigkeit des Deflektors 5 bemessen ist.

Am unteren Ende der Empfängeranordnung 6, 7 ist ein Drehmotor 24 angeordnet. Auf einer Welle 25 einer Getriebestufe 23 ist ein Absolut-oder Inkrementalgeber 26 befestigt.

Schließlich gehört zu der Vorrichtung noch die Auswerte-Elektronik 8, welche über nicht näher dargestellte elektrische Verbindungsleitungen mit dem Meßkopf 1 zwecks Übermittlung der relativen Winkelstellungen der Deflektoren 5, 6 entsprechend den Stellungen der Geber 16, 26 gekoppelt ist.

Zur einfachen Abstandsmessung genügt es, und hierzu wird auf die Figur 3 verwiesen, wenn nur der Deflektor 6 rotiert. Der Deflektor 5 steht still. Ein von dem Laser 3 ausgesandter Strahl 2 wird von dem Deflektor 5 abgelenkt und auf das Meßobjekt 4 geworfen. Von hier aus wird der Laserstrahl 2 reflektiert und über den Deflektor 6 unter 90° Ablenkung der Fotodiode 7 zugeleitet. Die Fotodiode 7 erhält stets dann einen Lichtimpuls, wenn sich der Normalenvektor der Spiegelfläche des Deflektors 6 und der Laserstrahl 2 in einer gemeinsamen Vertikalebene erstrecken. Da der Abstand A der Deflektoren 5, 6 voneinander bekannt ist, kann auf der Basis der Triangulation der jeweilige Abstand des Meßobjekts 4, 4' durch die Auswerte-Elektronik 8 ermittelt werden.

Die Figur 2, welche eine schematische Draufsicht der Figur 1 ist, veranschaulicht beispielsweise das Vermessen von gekrümmten Profilen 4 nach dem Biegeprozeß. Da hierbei Strecken gemessen werden müssen, ist es erforderlich, auch den Deflektor 5 rotieren zu lassen, damit der Laserstrahl 2 entlang des gesamten Meßobjekts 4 bewegt werden kann. Da bei dieser Ausführungsform der Deflektor 6 um ein Vielfaches schneller rotiert als der Deflektor 5, erhält die Fotodiode 7 im Zuge der Vorbeiführung des Laserstrahls 2 am Meßobjekt 4 eine Vielzahl von Impulsen jeweils dann, wenn sich der Normalenvektor der Spiegelfläche des Deflektors 6 und der Laserstrahl 2 in einer gemeinsamen Vertikalebene erstrecken. Dies ist in strichpunktierter Linienführung in Figur 2 veranschaulicht.

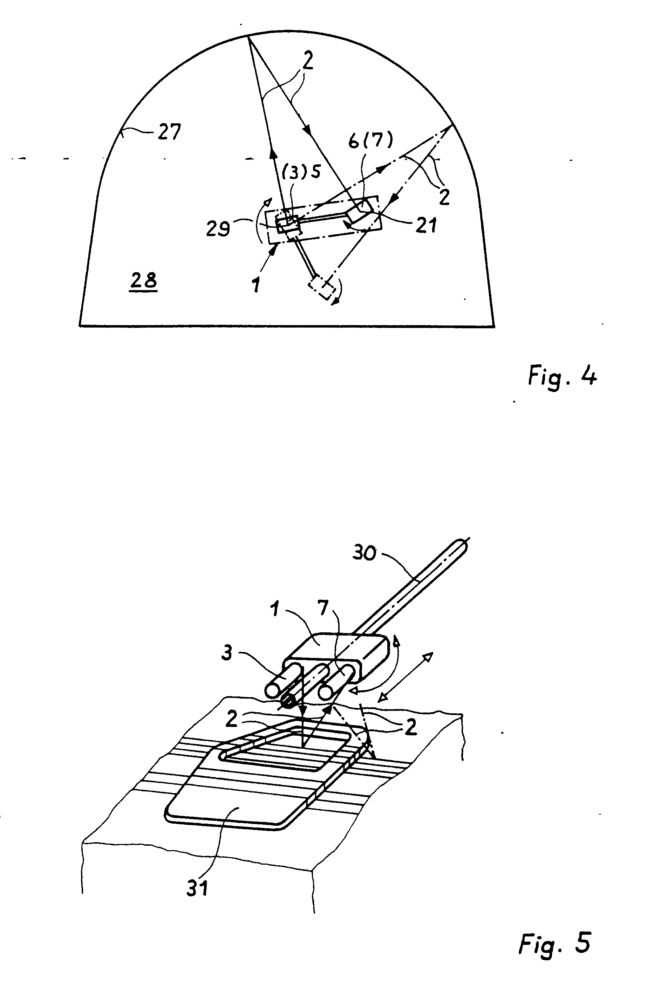

Im Falle der Darstellung der Figur 4 soll beispielsweise die Kontur 27 einer untertägigen Strecke 28 vermessen werden. Zu diesem Zweck kann die Vorrichtung gemäß der Ausführungsform der Figur 3 verwendet werden, wobei jedoch der gesamte Meßkopf 1 mit der Sender-und Empfängeranordnung 3, 5, 6, 7 noch um eine Achse 29 drehbar ist, die parallel zu der Drehachse 21 des Deflektors 6 verläuft. Die Drehachse 29 erstreckt sich in Längsrichtung des Lasers 3.

Die Figur 5 zeigt eine Ausführungsform unter Verwendung der Vorrichtung der Figuren 1 und 2. Der Meßkopf 1 rotiert hierbei nicht nur um eine Längsachse 30, sondern er ist auch in Richtung dieser Längsachse 30 noch bewegbar. Durch diese überlagernden Bewegungen des Meßkopfes 1 können folglich auch räumliche Gebilde 31 exakt vermessen werden.

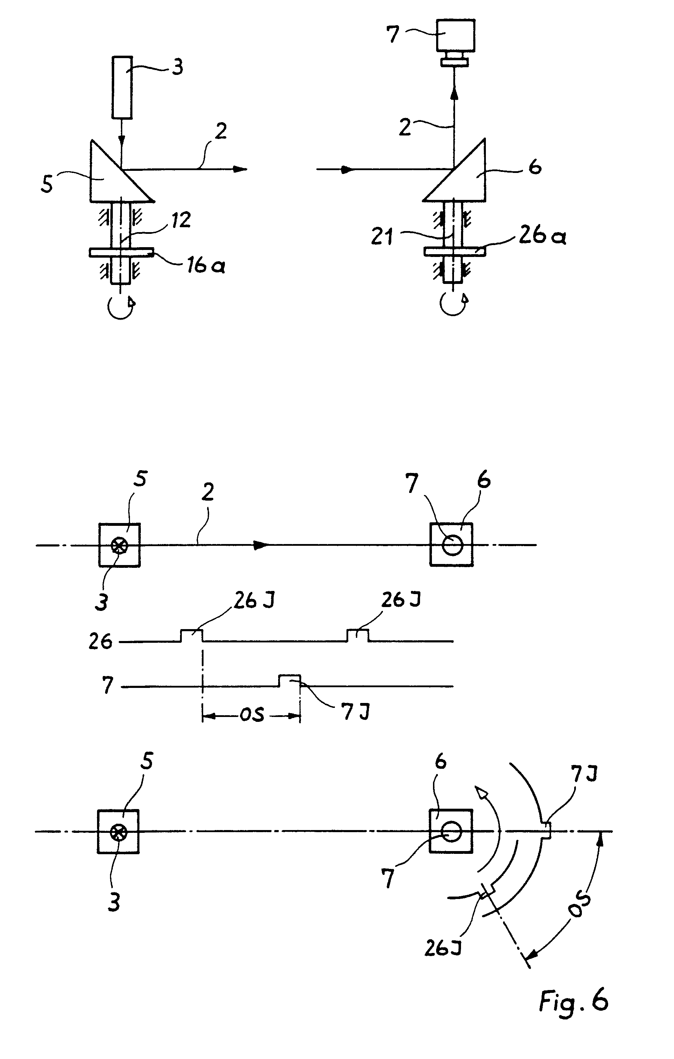

Anhand der Figur 6 wird die Justierung der Vorrichtung der Figur 1 erläutert.

Es sind in schematischer Darstellung der Laser 3, der senderseitige Deflektor 5, der empfängerseitige Deflektor 6 und die Fotodiode 7 veranschaulicht. Statt der Impulsscheiben 16, 26 von Absolut-oder Inkrementalgebern sind nunmehr aber Impulsscheiben 16a, 26a von Laufzeit-Drehgebern dargestellt.

Bei eingeschaltetem Laser 3 werden zunächst die beiden Deflektoren 5, 6 um die Drehachsen 12, 21 verschwenkt, bis daß der Laserstrahl 2 genau in die Fotodiode 7 einfällt.

Nunmehr wird der empfängerseitige Deflektor 6 zusammen mit der Impulsscheibe 26a mit konstanter Drehzahl gedreht, wobei sich je nach der Stellung der Impulsscheibe 26a und dem durch sie ausgelösten Impuls 26 I des Drehgebers ein Impulsbild ergibt mit einem abzugleichenden konstanten Offset OS. Der Impuls des Drehgebers ist mit 26 I und der Impuls des Empfängers 7 mit 7 I bezeichnet.

Im Anschluß an den Abgleich an der Achse 21 kann dann auch mit dem Deflektor 5 der anderen Achse 12 entsprechend verfahren werden.

Bezugszeichenaufstellung

1 Meßkopf
2 Lichtstrahl
3 Lichtquelle
4 Meßobjekt
5 Deflektor
6 Deflektor
7 Empfänger

4

8 Auswerte-Elektronik
9 Gehäuse f. 3
10 Gehäuse f. 5
11 Austrittsöffnung in 10
12 Drehachse
13 Lager
14 Justiereinheit
15 Schrittmotor
16 Codierscheibe
17 Gehäuse f. 6
18 Eintrittsöffnung
19 Objektiv
20 Gehäuse f. 7
21 Drehachse
22 Lager
23 Getriebestufe
24 Drehmotor
25 Welle v. 23
26 Impulsscheibe
27 Kontur v. 28
28 Strecke
29 Drehachse
30 Drehachse
31 Gebilde
4' Meßobjekt
7 I Impuls an 7
16a Impulsscheibe
26a Impulsscheibe
26 I Impuls an 26a
A Abstand v. 5 u. 6
OS Offset

**Ansprüche**

1. Vorrichtung zum berührungslosen Messen geometrischer Größen, welche eine einen gebündelten monochromatischen Stahl über einen Deflektor im Winkel auf ein Meßobjekt projizierende Lichtquelle, einen von dem auf das Meßobjekt treffenden Lichtstrahl sensibilisierbaren Empfänger, einen senkrecht zu dem vom Meßobjekt reflektierten Lichtstrahl rotierenden Deflektor zwischen dem Meßobjekt und dem Empfänger sowie eine auf der Basis der Triangulation wirksame Auswerte-Elektronik umfaßt, **dadurch gekennzeichnet,** daß die Achse des die Lichtquelle (3) in Richtung zum Deflektor (5) verlassenden Strahls (2) parallel zu der Drehachse (21) des dem punktuell empfindlichen Empfänger (7) zugeordneten Deflektors (6) und der in den Empfänger (7) einfallende Strahl (2) koaxial zu der Drehachse (21) des rotierenden Deflektors (6) verlaufen.

2. Vorrichtung nach Anspruch 1, **dadurch gekennzeichnet,** daß mindestens einer der beiden Deflektoren (5, 6) in Längsrichtung des die Lichtquelle (3) verlassenden Strahls (2) bzw. in Längsrichtung des in den Empfänger (7) einfallenden Strahls (2) verstellbar und arretierbar gelagert ist.

3. Vorrichtung nach Anspruch 1 oder 2, **dadurch gekennzeichnet,** daß der der Lichtquelle (3) zugeordnete Deflektor (5) um eine parallel zu der Drehachse (21) des dem Empfänger (7) zugeordneten Deflektors (6) verlaufende Achse (12) drehbar ist, welche koaxial zu der Achse des die Lichtquelle (3) verlassenden Strahls (2) verläuft.

4. Vorrichtung nach einem der Ansprüche 1 bis 3, **dadurch gekennzeichnet,** daß beide Deflektoren (5, 6) in einer gemeinsamen Halterung (1) gelagert sind und die Halterung (1) um eine parallel zu der Drehachse (21) des empfängerseitigen Deflektors (6) verlaufende Achse (29, 30) drehbar ist.

5. Vorrichtung nach einem der Ansprüche 1 bis 4, **dadurch gekennzeichnet,** daß beide Deflektoren (5, 6) in einer gemeinsamen Halterung (1) gelagert sind, die in Längsrichtung der Drehachse (21) des empfängerseitigen Deflektors (6) verlagerbar ist.

6. Vorrichtung nach einem der Ansprüche 1 bis 5, **dadurch gekennzeichnet,** daß die Deflektoren (5, 6) durch Prismen oder Spiegel mit konstanten Ablenkwinkeln gebildet sind.

7. Vorrichtung nach einem der Ansprüche 1 bis 6, **dadurch gekennzeichnet,** daß mindestens mit der mit einer konstanten Drehzahl umlaufenden Drehachse (21) des Deflektors (6) die Impulsscheibe (26) eines Absolut-oder Inkrementalgebers verbunden ist.

8. Vorrichtung nach einem der Ansprüche 1 bis 6, **dadurch gekennzeichnet,** daß mindestens mit der mit einer konstanten Drehzahl umlaufenden Drehachse (21) des empfängerseitigen Deflektors (6) die Impulsscheibe (26a) eines Laufzeit-Drehgebers verbunden ist.

Fig. 1

Fig. 2

Fig. 3

Fig. 4

Fig. 5

Fig. 6